**Europäisches Patentamt**

**European Patent Office**

**Office européen des brevets**

(19)

(11) Veröffentlichungsnummer : **0 040 791**
**B1**

# EUROPÄISCHE PATENTSCHRIFT

(12)

(45) Veröffentlichungstag der Patentschrift :
**01.06.83**

(51) Int. Cl.³ : **F 16 L   5/00**, F 16 L 25/00,
**F 16 L 39/00**, F 16 L 47/00

(21) Anmeldenummer : **81103830.6**

(22) Anmeldetag : **19.05.81**

(54) **Hauseinführung, für Medium-Transportleitungen insbesondere für Gas- und Wasserleitungen.**

(30) Priorität : **23.05.80 CH 4035/80**

(43) Veröffentlichungstag der Anmeldung :
**02.12.81 Patentblatt 81/48**

(45) Bekanntmachung des Hinweises auf die Patenterteilung : **01.06.83 Patentblatt 83/22**

(84) Benannte Vertragsstaaten :
**AT BE CH DE FR GB IT LI LU NL SE**

(56) Entgegenhaltungen :
AT B 339 102
DE A 1 801 908
DE A 2 644 599
DE B 2 352 571
GB A 1 491 154
GB A 1 557 813

(73) Patentinhaber : **GEORG FISCHER AKTIENGESELL-SCHAFT**
**Mühlentalstrasse 105**
**CH-8201 Schaffhausen (CH)**

(72) Erfinder : **Hurter, Fritz**
**Bocksrietstrasse 108**
**CH-8200 Schaffhausen (CH)**
Erfinder : **Kaiser, Roland**
**Buchbergstrasse 18**
**D-7712 Blumberg (DE)**

Jouve, 18, rue St-Denis, 75001 Paris, France

Hauseinführung, für Medium-Transportleitungen insbesondere für Gas- und Wasserleitungen

Die Erfindung betrifft eine Hauseinführung für Medium-Transportleitungen, insbesondere für Gas- und Wasserleitungen, wie sie im Oberbegriff von Anspruch 1 gekennzeichnet ist.

Wenn ein Gebäude an einem Versorgungsnetz für brennbare Medien, insbesondere an einem Gasleitungsnetz anzuschliessen ist, gilt die Forderung, dass im Gebäudeinneren, wegen der Feuergefahr, keine Kunststoffrohre verwendet werden dürfen, sofern sie nicht vollständig mit feuerfesten Ummantelungen, z. B. Metallrohren, umkapselt sind. Aus diesem Grunde werden heute in der Regel Kunststoffrohre ausserhalb des Gebäudes und im Inneren desselben Metallrohre verwendet.

Durch die GB-A-15 57 813 ist eine Vorrichtung mit den eingangs angeführten Merkmalen bekanntgeworden. Das Zufuhrrohr aus Kunststoff und das feuerfeste Rohr sind hierbei mit einem Formstück verbunden, so dass eine indirekte Verbindung beider Rohre mittels eines Schraubanschlusses mit dem Hausanschlussstück erfolgt.

Nachteilig hierbei ist, dass für das Anziehen der beiden Dichtungen für eine gasdichte Abdichtung an den Rohrverbindungen zwei verschiedene Verschraubungen erforderlich sind, von denen die eine nur nach Demontage des Hausanschlussstückes zugänglich ist.

Ferner ist es bei dieser Vorrichtung kaum möglich ohne Demontage des Hausanschlussstückes die Zufuhrleitung von flüssigen und festen Rückständen zu reinigen, die sich wegen Mediumsausscheidungen, beispielsweise im Gas oder im Wasser oder infolge von Rohrschäden, in der Hauseinführung ablagerten.

Ausgehend vom vorgenannten Stand der Technik ist es Aufgabe der vorliegenden Erfindung, das bestehende Prinzip der Hauseinführungen wesentlich vereinfachen und zu verbessern, sowie deren Kontrolle zu erleichtern, damit eine sichere mediums-, beispielsweise gasdichte, einfache und dauerhafte Hauseinführung entsteht, die einfache und periodische Kontrollen mit geringstem Kostenaufwand ermöglicht.

Diese Aufgabe ist erfindungsgemäss mit der Lehre gemäss dem gekennzeichneten Teil des Anspruches 1 gelöst.

Ausführungsformen dieser Lehre sind in den weiteren, abhängigen Ansprüchen umschrieben.

Die beschriebene Ausführung weist u. a. die folgenden Vorteile auf :

— eine Kontrolle der Hauseinführung auf Dichtigkeit ist im Hausinneren möglich, wobei auch beide Dichtungen ohne irgend eine Demontage im Hausinneren an einer Stelle gleichzeitig nachgezogen werden können,

— eine dauerhafte Abdichtung ist dadurch gewährleistet, dass ein das Medium führendes Kunststoffrohr in einem Mantelrohr angeordnet ist, das über eine Schraubverbindung mit der Innenverrohrung verbunden ist, wobei diese Verschraubung auch das Kunststoffrohr mit der Verrohrung mediumsdicht verbindet,

— eine Ueberdehnung des Kunststoffrohres, die ein Leck verursacht, kann nicht zum Eindringen von Medium, insbesondere Gas, in das Hausinnere führen, so dass Beschädigungen des Kunststoffrohres bei Erdarbeiten für die Hausbewohner deshalb ungefährlich sind, weil ausströmendes Medium, insbesondere Gas, durch des Mantelrohr in die Atmosphäre allenfalls ins Erdreich, ausserhalb des Hauses, strömt,

— eine Reinigung zum Entfernen von Mediumsrückständen z. B. Ablagerungen von Gasfeststoffen oder Erde, infolge Rohrbruch, in der Hauseinführung, ist in einfacher Weise durch Oeffnen einer Reinigungsöffnung im Gebäudeinneren möglich, die axial mit dem Kunststoff- und dem Mantelrohr ausgerichtet ist.

Nachfolgend wird ein Ausführungsbeispiel der erfindungsgemässen Hauseinführung anhand der Zeichnung näher erläutert.

Es zeigen :

Figur 1 eine Seitenansicht einer in einer Hauswand angeordneten Hauseinführung mit einem Ausschnitt von 90°, und

Figur 2 einen Ausschnitt aus Fig. 1, der den im Hausinneren gelegenen Teil der Hauseinführung darstellt, in grösserem Massstab.

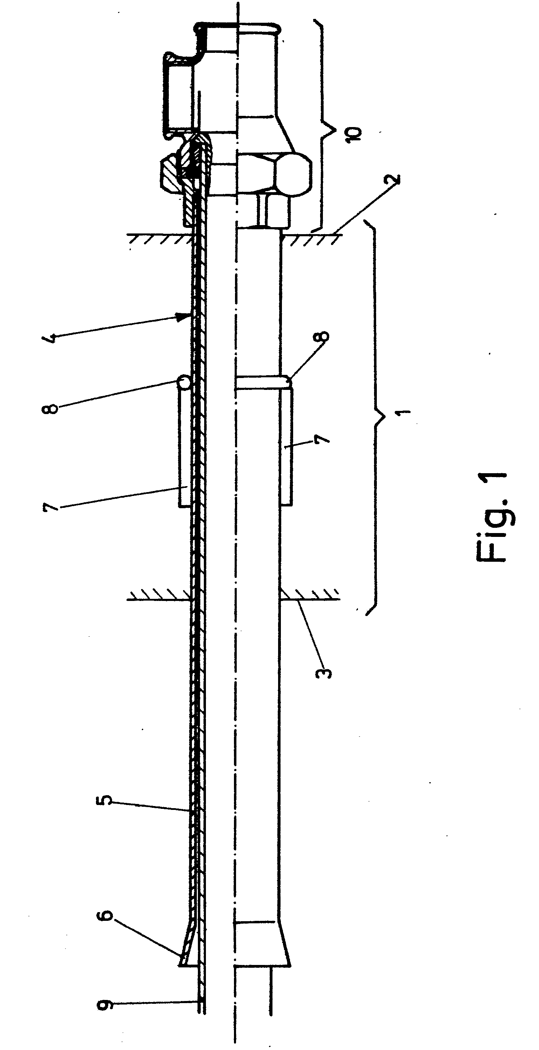

In Fig. 1 ist eine Mauer 1 eines Gebäudes mit einer Innen- 2 und eine Aussenfläche 3 dargestellt. Durch die Mauer 1 führt eine Hausdurchführung 4, die in der Mauer 1 einbetoniert ist. Die Hausdurchführung 4 besteht aus einem Mantelrohr 5, z. B. aus Stahl oder Eisen, oder einem anderen, nicht brennbaren Werkstoff, das am äusseren Ende 6 kegelstumpfförmig ausgeweitet ist. Im mittleren Mauerbereich ist das Mantelrohr 5 mit angeschweissten, angegossenen oder angeformten Körpern 7, 8 versehen, von denen die einen 7 zur Radial- und die anderen 8 zur Axialverankerung des Mantelrohres 5 in der Mauer 1 dienen.

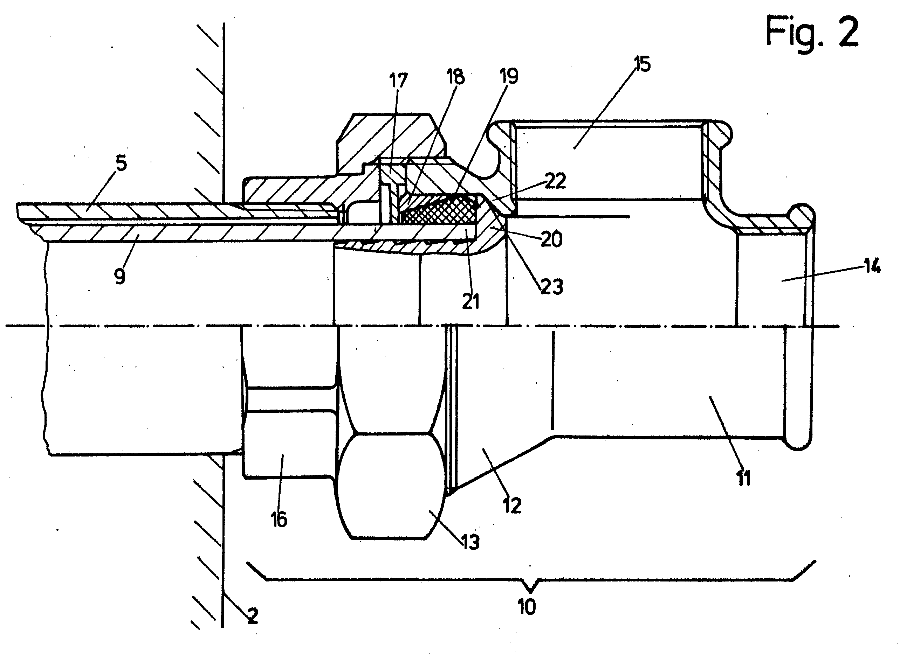

Etwa koaxial im Inneren des Mantelrohres 5 ist ein Kunststoffrohr 9 angeordnet, das mit einer Mediumsversorgungsquelle, beispielsweise einer Gasquelle, verbunden ist und benachbart zur Innenfläche 2 zusammen mit dem Mantelrohr 5 gas- und wasserdicht mit einem Uebergangsteil 10 verbunden ist, der in Fig. 2 in grösserem Massstab dargestellt ist.

Aus Fig. 2 geht hervor, dass der Uebergangsteil 10 zur Hauptsache aus einem T-Stück 11 besteht, dessen erste Oeffnung 12 mittels einer Ueberwurfmutter 13 gasdicht mit dem Mantelrohr 5 und dem Kunststoffrohr 9 verschraubt ist. Das T-Stück 11 ist an der zweiten, der ersten axial gegenüberliegenden Oeffnung 14 mit einem nicht dargestellten Schraubenverschluss versehen, der zur Reinigung der Hauseinführung 4 bzw. des Kunststoffrohres 9 ausgeschraubt werden kann. Die dritte Oeffnung 15 des T-Stücks 11 dient zur Aufnahme eines Rohres oder Ventils zur Zufuhr des Mediums, vorzugsweise von Gas oder Wasser, zum Gebäudeinneren.

Im folgenden werden die einzelnen Dichtungselemente, deren Zusammensetzung sowie der Einbau der gesamten Hauseinführung näher erläutert.

Beim Erstellen der Hausmauer 1 oder später wird das Mantelrohr 5 eingesetzt und festbetoniert. Wenn der Mediumsanschluss zu erstellen ist, wird das Kunststoffrohr 9 von innen oder aussen durch das Mantelrohr 5 verschoben. Danach wird ein durch die Ueberwurfmutter 13 geschobener Einlegteil 16 auf das Mantelrohr 5 gasdicht festgeschraubt und die Ueberwurfmutter 13 so weit wie möglich zur Innenfläche 2 hin verschoben. Danach werden eine Spannscheiben-Dichtung 17, ein Keilring 18 und eine Ringdichtung 19 über das freiliegende Ende des Kunststoffrohres 9 verschoben. Anschliessend wird ein Stütznippel 20 in das Ende 21 des Kunststoffrohres 9 eingeschlagen. Der Stütznippel ist auf der Aussenseite mit ringförmigen Widerhaken versehen, die den Stütznippel 20 nach dem Einschlagen derart festhalten, dass er praktisch nicht mehr hinausgezogen werden kann. Der Stütznippel 20 hält somit die Teile 17, 18 und 19 derart, dass sie nicht vom Kunststoffrohr 9 enffernt werden können.

Nun wird das T-Stück 11 bzw. dessen erste Oeffnung 12 über die Teile 18 und 19 gegen die Spannscheiben-Dichtung 17 verschoben und die Ueberwurfmutter 13 mit dem Aussengewinde des T-Stückes 11 rund um die erste Oeffnung 12 in Eingriff gebracht und angezogen. Beim Anziehen presst die Dichtung 17 den Keilring 18 über die Ringdichtung 19, so dass eine gasdichte Verbindung entsteht. Dabei drückt die Ringfläche 22 des T-Stückes 11 gegen die Ringfläche 23 am Stütznippel 20, so dass eine gasdichte Verbindung entsteht.

Die Teile 18-20 können z. B. aus Kunststoff bestehen, jedoch besteht die Spannscheiben-Dichtung 17 aus Metall oder einem anderen feuerfesten Werkstoff, damit eine vollständig metallische oder anderweitig feuerfeste Abschirmung des Kunststoffrohres 9 gegen Feuer gewährleistet ist.

Als Beispiel können die folgenden Materialien für die verschiedenen Teile verwendet werden :

| Teil Nr. | Material |
|---|---|
| 5, 7, 8 | Stahl, anderes Metall oder feuerfester Werkstoff |
| 9 | Polyäthylen, hart |
| 11, 13, 16 | Temperguss, weiss oder anderes Metall |
| 17 | Metall oder anderer feuerfester Werkstoff oder eine Kombination aus mehreren solchen Werkstoffen |
| 19 | Nitril-Butadien-Kautschuk |
| 18, 20 | Polyacetatcopolymerisat |

Das Mantelrohr 5 kann z. B. auch aus Asbest, Beton, Ziegel, Keramik oder Eternitt bestehen. Ferner kann das Rohr 5, z. B. bei Umbauten, aus einem bestehenden Metall-Zufuhrrohr bestehen, das in passender Länge abgeschnitten wurde. Dadurch werden z. B. Mauerarbeiten vermieden. Diese Lösung ist immer dann möglich, wenn das bestehende, bereits eingemauerte Rohr einen ausreichenden Durchmesser aufweist.

Die beschriebene Hauseinführung ist sehr einfach zu montieren, zu überwachen und auszubessern. Wenn beispielsweise das Kunststoffrohr aus irgendwelchen Gründen ausgewechselt werden muss, ist es ohne Austausch des Mantelrohres möglich.

Da sich der Uebergang vom Kunststoff- auf das Stahlrohr im Gebäudeinneren befindet, ist die Anschlussarbeit sehr einfach und unter angenehmen Arbeitsbedingungen durchführbar.

Darüberhinaus ist das Hauseinführungsrohr sehr gut zugänglich zu reinigen.

**Ansprüche**

1. Hauseinführung für Medium-Transportleitungen, insbesondere für Gas- und Wasserleitungen, mit einem Zufuhrrohr (9) aus Kunststoff, das mit einer Mediumquelle verbunden ist und etwa koaxial durch ein feuerfestes Rohr (5) durch die Hauswand geführt ist, sowie mit einem Hausanschlussstück (11) aus Metall auf der Wandinnenseite (2), welches sowohl mit dem Zufuhrrohr (9) als auch mit dem feuerfesten Rohr (5) durch einen einzigen Schraubanschluss (13) verbunden ist, dadurch gekennzeichnet, dass zwei Dichtungen (17) und (19) für die Abdichtung des Anschlusses des Rohres (5) und des Zufuhrrohres (9) mittels des einen Schraubanschlusses (13) verspannbar sind.

2. Hauseinführung nach Anspruch 1, dadurch gekennzeichnet, dass die erste Dichtung (17) als Spannscheiben-Dichtung ausgebildet ist und als Andrückelement für einen Keilring (18) und die als Ringdichtung ausgebildete zweite Dichtung (19) dient.

3. Hauseinführung nach Anspruch 1 oder 2, dadurch gekennzeichnet, dass der Schraubanschluss eine Ueberwurfmutter (13) aufweist.

4. Hauseinführung nach Anspruch 3, dadurch gekennzeichnet, dass das feuerfeste Rohr (5) mit einem daran befestigten Einlegteil (16) versehen ist, welches zur Abstützung der Ueberwurfmutter (13) ausgebildet ist.

5. Hauseinführung nach einem der Ansprüche 1 bis 4, dadurch gekennzeichnet, dass die Dichtung (17) aus mindestens einem feuerfesten Material besteht.

6. Hauseinführung nach Anspruch 5, dadurch gekennzeichnet, dass die Dichtung (17) aus Metall und einem weiteren, feuerfesten Material besteht.

7. Hauseinführung nach einem der Ansprüche 1 bis 6, dadurch gekennzeichnet, dass das Hausanschlussstück (11) ein T-Stück ist, dessen der Zufuhröffnung (12) gegenüberliegende Oeffnung (14) zur Reinigung des Zufuhrrohres (9) dient und normalerweise durch einen Schraubkörper verschlossen ist.

8. Hauseinführung nach Anspruch 7, dadurch gekennzeichnet, dass die dritte Oeffnung (15) mit einem Absperrorgan ausgestattet ist.

## Claims

1. House lead-in for medium-transporting lines, particularly for gas and water lines, having a plastics supply tube (9) which is connected to a medium source and is introduced through the house wall roughly coaxially through a fireproof tube (5), and having a house connecting piece (11) made of metal on the inside of the wall (2) which is connected both to the supply tube (9) and to the fireproof tube (5) by a single screw connection (13), characterised in that two seals (17) and (19) for sealing the connection of the tube (5) and the supply tube (9) can be braced by means of the one screw connection (13).

2. House lead-in according to claim 1, characterised in that the first seal (17) has the form of a tightening disc seal and serves as a pressure element for a conical ring (18) and the second seal (19) having the form of a ring seal.

3. House lead-in according to claim 1 or 2, characterised in that the screw connection has a retaining nut (13).

4. House lead-in according to claim 3, characterised in that the fireproof tube (5) is provided with an insert (16) secured thereto, which is designed to support the retaining nut (13).

5. House lead-in according to one of the claims 1 to 4, characterised in that the seal (17) consists of at least one fireproof material.

6. House lead-in according to claim 5, characterised in that the seal (17) consists of metal and another fireproof material.

7. House lead-in according to one of the claims 1 to 6, characterised in that the house connecting piece (11) is a T-piece, whose aperture (14) opposite the supply aperture (12) serves to clean the supply tube (9) and is normally closed off by a screw body.

8. House lead-in according to claim 7, characterised in that the third aperture (15) is fitted with a blocking member.

## Revendications

1. Dispositif d'introduction dans une maison, pour canalisations de fluide, notamment pour des conduits de gaz et d'eau, comportant un tube d'introduction (9) en matière plastique, qui est relié à une source de fluide et qui est guidé à peu près coaxialement par un tube réfractaire (5) au travers du mur de la maison, ainsi qu'un élément de raccordement à la maison (11), formé d'un métal sur le côté intérieur de mur (2) et qui est relié aussi bien avec le tube d'introduction (9) qu'également avec le tube réfractaire (5) par une seule liaison filetée (13), caractérisé en ce que deux joints d'étanchéité (17 et 19) pour assurer l'étanchéité du raccordement du tube (5) et du tube d'introduction (9) peuvent être serrés à l'aide de la liaison filetée (13).

2. Dispositif d'introduction selon la revendication 1, caractérisé en ce que le premier joint d'étanchéité (17) est agencé sous forme d'un joint à disque de serrage et sert d'élément d'application pour une bague à section en coin (18) et pour le second joint d'étanchéité (19) agencé sous forme d'un joint annulaire.

3. Dispositif d'introduction selon l'une des revendications 1 ou 2, caractérisé en ce que la liaison filetée comporte un écrou à chapeau (13).

4. Dispositif d'introduction selon l'une des revendications 1 ou 2, caractérisé en ce que le tube réfractaire (5) est pourvu d'une partie d'insertion (16) fixée sur celui-ci et qui est agencée de manière à soutenir l'écrou à chapeau (13).

5. Dispositif d'introduction selon l'une des revendications 1 à 4, caractérisé en ce que le joint d'étanchéité (17) est formé d'au moins un matériau réfractaire.

6. Dispositif d'introduction selon la revendication 5, caractérisé en ce que le joint d'étanchéité (17) est formé d'un métal ou d'un autre matériau réfractaire.

7. Dispositif d'introduction selon l'une des revendications 1 à 6, caractérisé en ce que l'élément de raccordement à la maison (11) est une pièce en T dont l'ouverture (14) placée à l'opposé de l'ouverture d'introduction (12) sert au nettoyage du tube d'introduction (9) et est normalement fermée par un corps fileté.

8. Dispositif d'introduction selon la revendication 7, caractérisée en ce que la troisième ouverture (15) est pourvue d'un organe d'obturation.

Fig. 1

Fig. 2